# EUROPEAN PATENT APPLICATION

(11) **EP 4 787 596 A1**
(43) Date of publication of application: **05.08.2026**
(21) Application number: 24881014.5
(22) Date of filing: 29.05.2024
(51) Int. Cl.: H01M 50/457, H01M 50/491, H01M 10/05

(54) **SEPARATOR ASSEMBLY, BATTERY CELL, BATTERY AND ELECTRIC DEVICE**

(30) Priority: 27.10.2023 CN 202311407537
(71) Applicant: Contemporary Amperex Technology Co., Limited, Ningde, Fujian 352100 (CN)
(72) Inventor: HUANG, Jiantao, Ningde, Fujian 352100 (CN); YE, Yonghuang, Ningde, Fujian 352100 (CN); LI, Xiao, Ningde, Fujian 352100 (CN); XU, Xiaofu, Ningde, Fujian 352100 (CN); LUO, Chenxu, Ningde, Fujian 352100 (CN); WANG, Baoying, Ningde, Fujian 352100 (CN)
(74) Representative: Lorenz Seidler Gossel Part. mbB
(86) International application number: PCT/CN2024/095994
(87) International publication number: WO 2025/086635

(57) **Abstract**

Provided are a separator assembly, a battery cell, a battery and an electric device. The separator assembly comprises a first separator, wherein the first separator comprises a first base film and a first coating, the first coating is located on the surface of at least one side of the first base film, the first coating comprises an inorganic material, and the volume average particle size Dv50 of the inorganic material satisfies: Dv50 ≤0.16 µm. The separator assembly can reduce the risk of short-circuiting a battery cell without deteriorating the rate performance of the battery cell, so that the battery cell has relatively good overall performance.

## Description

### CROSS-REFERENCE TO RELATED APPLICATIONS

The present application claims priority to Chinese Patent Application No. 202311407537.5, entitled "SEPARATOR ASSEMBLY, BATTERY CELL, BATTERY, AND POWER CONSUMING APPARATUS" and filed on October 27, 2023, which is incorporated herein by reference in its entirety.

### TECHNICAL FIELD

The present application relates to the technical field of batteries, and in particular, to a separator assembly, a battery cell, a battery, and a power consuming apparatus.

### BACKGROUND

As environmental pollution becomes increasingly severe, the new energy industry has drawn more and more attention from people. In the new energy industry, battery technologies are an important factor related to development of the new energy industry.

A battery cell includes a positive electrode plate, a negative electrode plate, and a separator located between the positive electrode plate and the negative electrode plate. The arrangement of the separator is crucial for the performance of the battery cell. Therefore, how to provide a separator assembly to improve the overall performance of a battery cell is a technical problem to be urgently solved.

### SUMMARY

The present application is made in view of the above-mentioned subject, and an objective thereof is to provide a separator assembly, so as to reduce the risk of short-circuiting a battery cell without deteriorating the rate performance of the battery cell, thereby improving the overall performance of the battery cell.

To achieve the above objective, the present application provides a separator assembly, a battery cell, a battery, and a power consuming apparatus.

According to a first aspect, the present application provides a separator assembly, which includes: a first separator. The first separator includes a first base film and a first coating. The first coating is located on a surface of at least one side of the first base film. The first coating includes an inorganic material. An average particle size of a volume Dv50 of the inorganic material satisfies: Dv50 ≤ 0.16 µm.

An embodiment of the present application provides a separator assembly. The separator assembly includes a first separator. The first separator includes a first base film and a first coating located on a surface of at least one side of the first base film. An average particle size of a volume Dv50 of the inorganic material in the first coating satisfies: Dv50 ≤ 0.16 µm. In this way, the inorganic material has a relatively small particle size, and the size of voids between inorganic materials is relatively small, which is more favorable for blocking the passage of dendrites, thereby making the separator assembly denser, reducing the risk of being punctured by dendrites, and lowering the risk of short-circuiting the battery cell. In addition, the separator assembly is denser, and the requirement for the thickness of the separator assembly is correspondingly reduced. The separator assembly can achieve the effect of blocking dendrites from puncturing the separator assembly with the thickness unchanged or even reduced, thereby reducing the impact of an increased thickness of the separator assembly on the rate performance of the battery cell. Therefore, the technical solution of the embodiment of the present application can reduce the risk of short-circuiting the battery cell without deteriorating the rate performance of the battery cell, which is beneficial for improving the overall performance of the battery cell.

In a possible implementation, the average particle size of the volume Dv50 of the inorganic material satisfies: 0.04 µm ≤ Dv50 ≤ 0.16 µm. In this way, the inorganic material has a relatively suitable average particle size of a volume, which can reduce the risk of gelation of the prepared slurry caused by an excessively small average particle size of a volume of the inorganic material.

In a possible implementation, a porosity σ1 of the first base film satisfies: 30% ≤ σ1 ≤ 45%.

In the above technical solution, the porosity of the first base film is relatively small, and the first base film is also relatively dense, thereby making the separator assembly relatively dense and reducing the risk of puncturing the separator assembly. In addition, during the charging and discharging process of the battery cell, metal (such as lithium or sodium) is not easily precipitated on the surface of the first coating, and the surface of the first coating is relatively flat. When the first coating is arranged facing the negative electrode plate, it is beneficial for further reducing the risk of short-circuiting the battery cell.

In a possible implementation, the separator assembly further includes: a second separator. The second separator is located on a side of the first coating away from the first base film. A porosity of the second separator is greater than a porosity of the first separator. The porosity of the second separator is relatively large, and the porosity of the first separator is relatively low. In this way, in the separator assembly, the sizes of the voids can form a gradient distribution, and the overall porosity of the separator assembly increases. This is beneficial for improving the electrolyte retention capability of the separator assembly while the separator assembly has the effect of preventing dendrite puncture.

In a possible implementation, the second separator includes: a second base film. The second base film is located on the side of the first coating away from the first base film.

In a possible implementation, the second separator includes: a second base film and a second coating. The second coating is located between the second base film and the first coating. Or, the second base film is located between the second coating and the first coating.

In the above technical solution, the sizes of the voids in the separator assembly can form a gradient distribution, and the electrolyte retention capability of the separator assembly is improved.

In a possible implementation, over an area of 200 nm × 200 nm, a number B of voids in a surface of the first coating satisfies: 10 ≤ B ≤ 60.

In the above technical solution, by reasonably setting the range of B, the separator assembly is relatively dense, and the resistance to dendrite puncture is increased. At the same time, the number of voids is not too large, so the particle size of the inorganic material is not too small, which can reduce the risk of gelation of the slurry for preparing the first coating during the process of preparing the slurry for the first coating.

In a possible implementation, in the first coating, a size C of voids between inorganic materials satisfies: C ≤ 50 nm; optionally, C ≤ 20 nm. In this way, the first coating is relatively dense, and the risk of puncturing the separator assembly is relatively low.

In a possible implementation, the inorganic material includes a ceramic material; optionally, the inorganic material includes at least one of silicon dioxide, aluminum oxide, zirconium trioxide, or boehmite. Using the above inorganic material facilitates the preparation of the relatively dense first coating.

In a possible implementation, an areal density D of the first coating satisfies: D ≤ 3 g/mm²; optionally, D ≤ 2.5 g/mm². In this way, the first coating has a relatively small areal density, so that the first coating can have a relatively small thickness.

In a possible implementation, a thickness d1 of the first coating satisfies: 1.5 µm ≤ d1 ≤ 4 µm; optionally, d1 satisfies: 1.5 µm ≤ d1 ≤ 2 µm. In this way, the first coating has a relatively small thickness and a relatively high degree of densification, so that the battery cell can have relatively good rate performance while having a relatively low short-circuit risk.

In a possible implementation, a porosity σ0 of the separator assembly satisfies: 30% ≤ σ0 ≤ 40%. In this way, the porosity of the separator assembly is relatively low, the separator assembly is denser, and the risk of being punctured by dendrites is relatively low, thereby the risk of short-circuiting the battery cell is relatively low.

According to a second aspect, the present application provides a battery cell, which includes the separator assembly according to the first aspect and any implementation therein.

In a possible implementation, the battery cell further includes: a positive electrode plate and a negative electrode plate. The separator assembly is disposed between the positive electrode plate and the negative electrode plate. The first coating faces the negative electrode plate. In this way, the negative electrode plate faces the side of the separator assembly where the first coating is disposed, which is beneficial for better protecting the separator assembly.

In a possible implementation, the battery cell is an alkali metal battery cell; optionally, the battery cell is a sodium metal battery cell. During the charging and discharging process of an alkali metal battery cell, dendrites are easily formed on the negative electrode. By disposing the separator assembly in the above embodiments in the alkali metal battery cell, the risk of internally short-circuiting the battery cell is reduced, while the battery cell has relatively good rate performance.

In a possible implementation, the battery cell is a sodium-ion battery cell or a lithium-ion battery cell. In the case of sodium precipitation in a sodium-ion battery cell or lithium precipitation in a lithium-ion battery cell, the separator assembly is relatively dense, so that the risk of being punctured by precipitated lithium dendrites or sodium dendrites is relatively low. In addition, the sodium-ion battery cell or the lithium-ion battery cell may also be a battery cell with a relatively small CB value.

In a possible implementation, the battery cell is a secondary battery cell.

According to a third aspect, the present application provides a battery, which includes the battery cell according to the second aspect and any possible implementation therein.

According to a fourth aspect, the present application provides a power consuming apparatus, which includes the battery according to the third aspect.

### BRIEF DESCRIPTION OF THE DRAWINGS

In order to describe the technical solutions of the embodiments of the present application more clearly, the following briefly introduces the accompanying drawings required in the embodiments of the present application. Clearly, the accompanying drawings described below are only some embodiments of the present application. Those of ordinary skill in the art can also obtain other drawings according to the accompanying drawings without any creative effort.
FIG. 1 is a schematic diagram of a separator assembly according to an embodiment of the present application;
FIG. 2 is a schematic diagram of a separator assembly according to an embodiment of the present application;
FIG. 3 is a schematic diagram of a separator assembly according to an embodiment of the present application;
FIG. 4 is a schematic diagram of a separator assembly according to an embodiment of the present application;
FIG. 5 is a schematic diagram of a separator assembly according to an embodiment of the present application;
FIG. 6 is a schematic diagram of a separator assembly according to an embodiment of the present application;
FIG. 7 is a schematic diagram of a separator assembly according to an embodiment of the present application;
FIG. 8 is a schematic diagram of a battery cell according to an embodiment of the present application;
FIG. 9 is a schematic diagram of a battery according to an embodiment of the present application; and
FIG. 10 is a schematic diagram of a power consuming apparatus according to an embodiment of the present application.

### DETAILED DESCRIPTION

Hereinafter, embodiments specifically disclosing the separator assembly, the battery cell, the battery, and the power consuming apparatus of the present application are described in detail with reference to the accompanying drawings as appropriate. However, there may be situations where unnecessary detailed descriptions are omitted. For example, there may be situations where detailed descriptions of well-known matters and repeated descriptions of actually the same structure are omitted, for the purpose of preventing the following descriptions from becoming unnecessarily lengthy, and helping to understand by those skilled in the art. In addition, the accompanying drawings and subsequent descriptions are provided for those skilled in the art to fully understand the present application, and are not intended to limit the subject matters recited in the claims.

Any "range" disclosed in the present application is defined by a lower limit and an upper limit. A given range is defined by selecting a lower limit and an upper limit. The selected lower limit and upper limit define boundaries of the particular range. The range defined in this way may include or exclude end values, and may be arbitrarily combined, that is, any lower limit may be combined with any upper limit to form a new range. For example, if ranges 60 to 120 and 80 to 110 are listed for a particular parameter, it is to be understood that ranges of 60 to 110 and 80 to 120 are also expectable. Additionally, if the minimum range values 1 and 2 and the maximum range values 3, 4, and 5 are listed, the following ranges are all expectable: 1 to 3, 1 to 4, 1 to 5, 2 to 3, 2 to 4, and 2 to 5. In the present application, unless otherwise stated, the numerical range "from a to b" represents an abbreviated representation of any combination of real numbers between a and b, where both a and b are real numbers. For example, the numerical range "0 to 5" means that all real numbers between 0 and 5 are listed herein, and "0 to 5" is merely an abbreviated representation of the combination of these numbers. In addition, when a certain parameter is expressed as an integer ≥2, it is equivalent to disclosing that the parameter is, for example, an integer such as 2, 3, 4, 5, 6, 7, 8, 9, 10, 11, 12, or the like.

Unless otherwise specified, all the embodiments and optional embodiments of the present application may be combined with each other to form new technical solutions. Unless otherwise specified, all technical features and optional technical features of the present application may be combined with each other to form new technical solutions.

As environmental pollution becomes increasingly severe, the new energy industry has drawn more and more attention from people. In the new energy industry, battery technologies are an important factor related to development of the new energy industry. A battery cell includes a positive electrode plate, a negative electrode plate, and a separator located between the positive electrode plate and the negative electrode plate. The arrangement of the separator is crucial for the performance of the battery cell. The separator may include a base film alone, or may include a base film and a ceramic coating disposed on the surface of the base film. During the charging and discharging process of the battery cell, metal dendrites may be precipitated on the surface of the negative electrode plate. The separator can block the metal dendrites to a certain extent, reducing the risk of battery short-circuiting caused by the metal dendrites puncturing the separator and resulting in the connection between the positive electrode plate and the negative electrode plate.

However, for a metal battery cell, the probability of dendrite formation is relatively high. It is difficult for a base film alone or a conventional ceramic coating disposed only on the base film to achieve a good effect of preventing dendrite puncture. Increasing the thickness of the ceramic coating can improve the puncture resistance of the separator, but the increased thickness of the ceramic coating leads to an increase in the overall thickness of the separator, thereby making an ion transport path more tortuous or longer, which results in a decrease in rate performance and other performances.

In view of this, the present application provides a separator assembly. By setting the particle size of the material in the coating of the separator assembly, the separator assembly has a relatively good ability to prevent dendrite puncture and ions have a suitable transport path, so that the battery cell has a relatively low short-circuit risk without deteriorating the rate performance.

### [Separator Assembly]

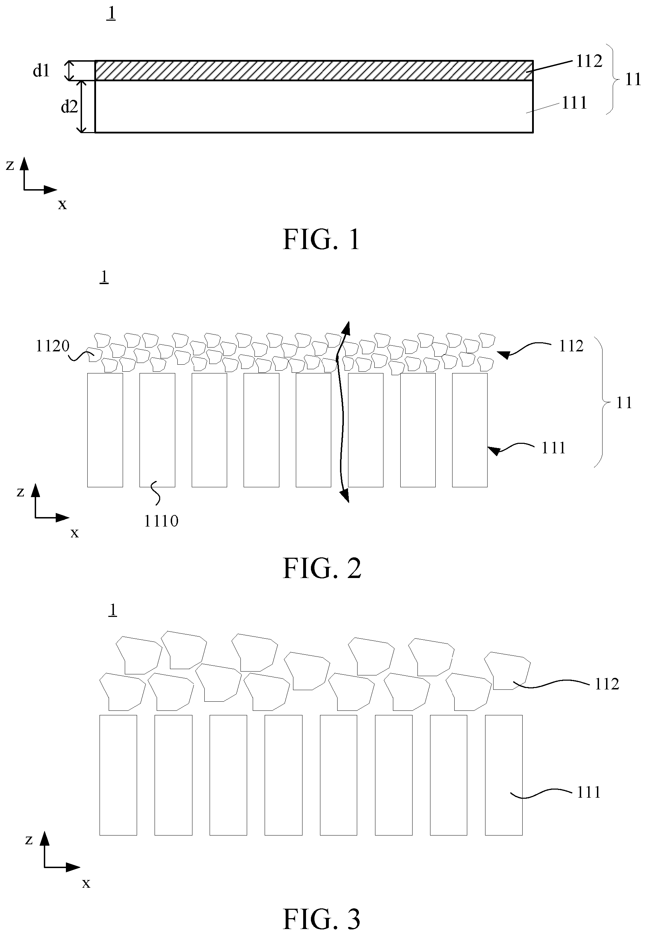

FIG. 1 is a schematic diagram of a separator assembly according to an embodiment of the present application. FIG. 2 is a schematic diagram of a separator assembly according to an embodiment of the present application. As shown in FIG. 1 and FIG. 2, a separator assembly 1 includes: a first separator 11.

The first separator 11 includes a first base film 111 and a first coating 112. The first coating 112 is located on a surface of at least one side of the first base film 111.

Along a thickness direction of the first base film 111, the first base film 111 has two opposite surfaces. The thickness direction of the first base film 111 may be the z direction in FIG. 1.

For example, as shown in FIG. 1, the first coating 112 may be located on a surface of one side of the first base film 111 in the thickness direction. In other arrangements, the first coating 112 may also be located on surfaces of both sides of the first base film 111 in the thickness direction, that is, both opposite surfaces of the first base film 11 in the thickness direction are provided with the first coating 112.

The first coating 112 includes an inorganic material. An average particle size of a volume Dv50 of the inorganic material satisfies: Dv50 ≤ 0.16 µm.

The inorganic material may include a ceramic material. For example, the inorganic material is aluminum oxide.

The average particle size of the volume Dv50 of the inorganic material may be 0.02 µm, 0.04 µm, 0.08 µm, 0.1 µm, 0.16 µm, or any value within the above ranges.

The inorganic material has a relatively small average particle size of a volume, so that the size of voids between particles of the inorganic material is relatively small, the probability of dendrite growth encountering obstacles is increased, and it is not easy for dendrites to pass through the small-sized voids. Therefore, the first coating 112 is relatively dense, which can effectively reduce the risk of puncturing the separator assembly 1, thereby reducing the risk of short-circuiting the battery cell.

Compared with an inorganic material having a relatively large particle size, for example, inorganic material particles having an average particle size of a volume greater than 1 µm, the size of voids between the inorganic material particles in this embodiment is relatively small, the number of voids increases, and the path for metal ions to pass through is more tortuous. However, the first coating 112 prepared from the inorganic material in this embodiment has a higher degree of densification, so that the first coating 112 can have a relatively high ability to prevent dendrite puncture with a smaller thickness. Therefore, the technical solution of this embodiment can balance the densification degree of the separator assembly 1 and the transport path of ions, thereby reducing the impact of an increased thickness of the separator assembly on the rate performance of the battery cell.

It should be noted that the separator assembly 1 may include only the first separator 11, and may also include a separator structure other than the first separator 11.

In this embodiment, the porosity of the first base film 111 is not particularly limited, as long as the first coating 112 satisfies the above configuration.

In this embodiment of the present application, the inorganic material has a relatively small particle size, the size of voids between the inorganic materials is relatively small, and the first coating 112 is relatively dense. In addition, by setting the particle size of the inorganic material to satisfy the above range, the first coating 112 can have a relatively high degree of densification with a relatively small thickness, which is beneficial for reducing the length of the ion transport path. Therefore, the technical solution of this embodiment of the present application can balance the densification degree of the separator assembly 1 and the transport path of ions, so that the battery cell has a relatively low short-circuit risk and also has relatively high rate performance, which is beneficial for improving the performance of the battery cell.

In some embodiments, the average particle size of the volume Dv50 of the inorganic material satisfies: 0.04 µm ≤ Dv50 ≤ 0.16 µm.

Compared with an inorganic material having a relatively small particle size, for example, an inorganic material having an average particle size of a volume less than 0.04 µm, in the process of preparing a slurry using the inorganic material of this embodiment, the risk of agglomeration of the inorganic material and gelation of the slurry caused by an excessively small particle size of the inorganic material can be reduced.

In some embodiments, a porosity σ1 of the first base film 111 satisfies: 30% ≤ σ1 ≤ 45%. σ1 may be 30%, 40%, 45%, or any value within the above ranges.

As an example, σ1 is 40%.

As another example, σ1 is 30%. In this way, the porosity of the first base film 111 is lower, so that the first separator 11 has a stronger ability to prevent dendrite puncture.

In this embodiment, as shown in FIG. 2, the porosity σ1 of the first base film 111 satisfies: 30% ≤ σ1 ≤ 45%, and the average particle size of the volume of the inorganic material in the first coating 112 satisfies Dv50 ≤ 0.16 µm. In this way, the separator assembly 1 is denser, and the risk of being punctured by dendrites is further reduced. In addition, during the charging and discharging process of the battery cell, metal dendrites (such as lithium or sodium) are not easily formed on the surface of the first coating 112, and the surface of the first coating 112 is relatively flat. Besides, when the first coating 112 is arranged facing the negative electrode plate (i.e., when the first coating 112 is in direct contact with the negative electrode plate), it is beneficial for further reducing the risk of short-circuiting the battery cell.

In addition, compared with a material having an average particle size of a volume greater than 0.16 µm, the particle size of the inorganic material in this embodiment is smaller, so the ratio of the protruding height of the particles of the inorganic material to the height of the first coating 112 is smaller, thus the surface of the first coating 121 in this embodiment is flatter and the roughness is also lower. The degree of protrusion of the particles of the inorganic material can be observed by atomic force microscopy (AFM) and characterized by the microscopic morphology observed by AFM.

FIG. 3 is a schematic diagram of a separator assembly according to an embodiment of the present application. Compared with FIG. 2, in FIG. 3, the particle size of the inorganic material is larger, and the voids between the inorganic materials are also larger.

In some embodiments, as shown in FIG. 3, the separator assembly 1 includes a first separator 11, the first separator 11 includes a first base film 111 and a first coating 112, and a porosity σ1 of the first base film 111 satisfies: 30% ≤ σ1 ≤ 45%. σ1 may be 30%, 40%, 45%, or any value within the above ranges. In this embodiment, the particle size of the inorganic material in the first coating 112 is not particularly limited, but the porosity of the first base film 111 is limited. Compared with a base film having a porosity of 45% to 55%, the porosity of the first base film 111 is smaller, and the first base film 111 is denser, so that the performance of the separator assembly 1 in preventing dendrite puncture is increased.

It needs to be stated that FIG. 2 and FIG. 3 are used to explain the voids in the separator assembly 1, the voids between particles of the inorganic material, and the size of the particles of the inorganic material. In addition, they can also explain the voids between particles of the first base film 111 (the particles refer to the smallest units constituting the first base film 111), so as to reflect the void size of the first base film 111 and the void size of the first coating 112.

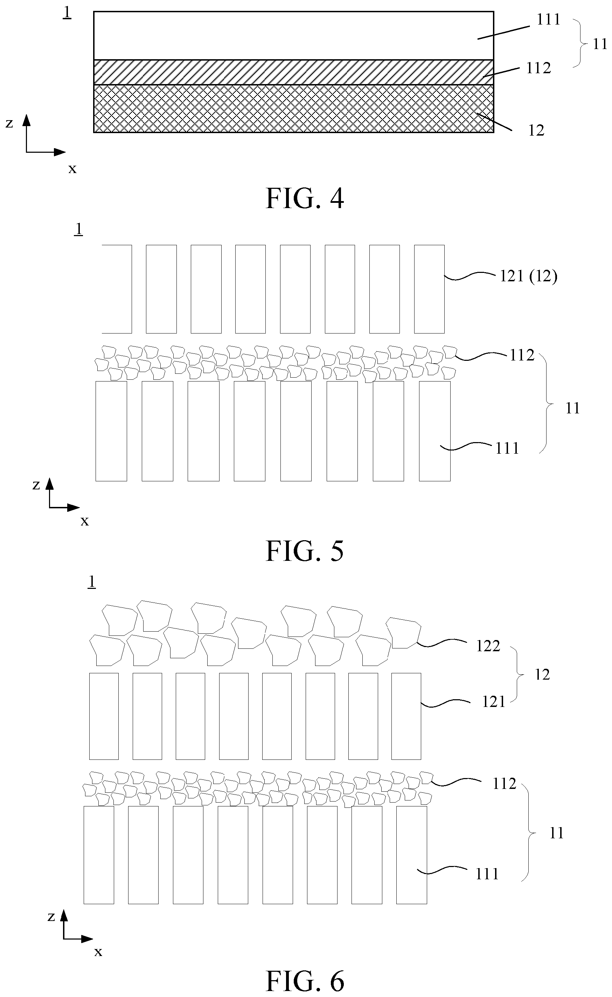

FIG. 4 is a schematic diagram of a separator assembly according to an embodiment of the present application. In some embodiments, as shown in FIG. 4, the separator assembly 1 further includes: a second separator 12.

The second separator 12 is located on a side of the first coating 112 away from the first base film 111, that is, the first coating 112 is located between the second separator 12 and the first base film 111.

A porosity of the second separator 12 is greater than a porosity of the first separator 11. In this way, the size of voids in the second separator 12 is relatively large, and the size of voids in the first separator 11 is relatively small, so that voids having a gradient distribution can be formed between the first separator 11 and the second separator 12, and a certain amount of electrolyte can be stored in the large voids, which is beneficial for improving the electrolyte retention capability of the separator assembly 1.

In this embodiment, the porosity of the second separator 12 is relatively large, and the porosity of the first separator 11 is relatively low. In this way, in the separator assembly 1, the sizes of the voids can form a gradient distribution, which is beneficial for improving the electrolyte retention capability of the separator assembly 1.

FIG. 5 is a schematic diagram of a separator assembly according to an embodiment of the present application. In some embodiments, as shown in FIG. 5, the second separator 12 includes: a second base film 121, and the second base film 121 is located on a side of the first coating 112 away from the first base film 111.

As an example, the first base film 111 and the second base film 121 are made of the same material and have the same porosity. In addition, the first base film 111 and the second base film 121 may also be made of different materials and/or have different porosities, and this embodiment of the present application includes but is not limited thereto.

In this embodiment, the second separator 12 includes only the second base film 121, and the first coating 112 is disposed between the first base film 111 and the second base film 121. The porosity of the second base film 121 is greater than the porosity of the first coating 112, and the size of voids in the second base film 121 is greater than the size of voids in the first coating 112, so that voids having a gradient distribution can be formed between the second base film 121 and the first coating 112.

FIG. 6 is a schematic diagram of a separator assembly according to an embodiment of the present application. FIG. 6 is a schematic diagram of a separator assembly according to an embodiment of the present application. In some embodiments, as shown in FIG. 6, the second separator 12 includes: a second coating 122, and the second coating 122 is located on a side of the first coating 112 away from the first base film 111.

For example, as shown in FIG. 6, the second separator 12 includes a second base film 121 and a second coating 122, the first coating 112 is located between the first base film 111 and the second separator 12, and the second base film 121 is located between the first coating 112 and the second coating 122. As an example, the porosity of the second base film 121 is greater than the porosity of the first coating 112, and the porosity of the second coating 122 is greater than the porosity of the first coating 112.

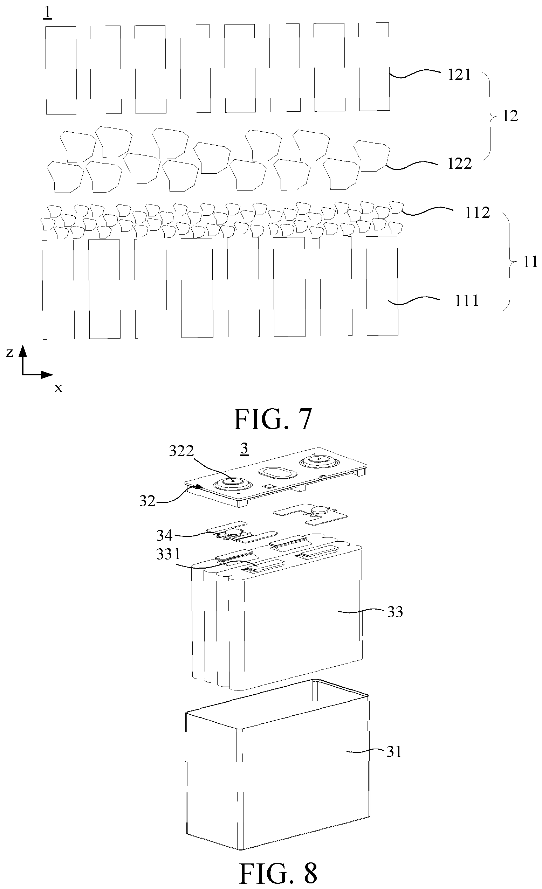

As another example, as shown in FIG. 7, the second separator 12 includes a second base film 121 and a second coating 122, the first coating 112 is located between the first base film 111 and the second separator 12, and the second coating 122 is located between the first coating 112 and the second base film 121. As an example, the porosity of the second base film 121 is greater than the porosity of the first coating 112, and the porosity of the second coating 122 is greater than the porosity of the first coating 112.

In this embodiment, the sizes of the voids in the separator assembly 1 can form a gradient distribution, which is beneficial for improving the electrolyte retention capability of the separator assembly 1.

In the structures of the separator assembly 1 shown in FIG. 4 to FIG. 6, the first separator 11 and the second separator 12 may be prepared separately, and then the first separator 11 and the second separator 12 are combined together. The second separator 12 may be a separator in the related art, which facilitates the preparation of the separator assembly 1 and reduces the complexity of the preparation of the separator assembly 1.

In some embodiments, the second separator 12 includes only the second coating 122, and the first coating 112 is located between the first base film 111 and the second coating 122. The second coating 122 may be prepared by processes such as spraying or coating on the surface of the first coating 112.

In some embodiments, over a length of 200 nm, a number A of voids in a surface of the first coating 112 satisfies: 3 ≤ A ≤ 8.

The voids may be outlets or inlets for ion transport. Along the thickness direction of the separator assembly 1, a plurality of communicating voids may form channels for ion transport. The channels are used to transport metal ions, such as sodium ions. Sodium ions may be transported from the positive electrode plate to the negative electrode plate through the channels in the separator assembly 1. For example, as shown in FIG. 2, a channel may refer to a solid line with a double arrow in black in the figure, which indicates that metal ions may pass through the separator assembly 1 through the channel. A void may refer to a void between the smallest units 1120 of the first coating 112.

The number of voids in the surface of the first coating 112 refers to the number of voids in a surface of one side of the first coating 112 in the thickness direction. The surface is perpendicular to the thickness direction of the separator assembly 1.

Over a length of 200 nm, the number A of voids may be 3, 4, 5, 6, 7, 8, or any value within the above ranges. Compared with a separator assembly having a number of voids less than 3 over a length of 200 nm, the first coating 112 has a relatively large number of voids, so that the size of the voids is smaller, it is not easy for dendrites to pass through the voids, the separator assembly 1 is denser, the risk of being punctured by dendrites is reduced, and the risk of short-circuiting the battery cell is reduced. In addition, the separator assembly 1 is denser, and the requirement for the thickness of the separator assembly 1 is correspondingly reduced. The separator assembly 1 can achieve the effect of blocking dendrites from puncturing the separator assembly 1 with the thickness unchanged or even reduced, thereby reducing the risk of adversely affecting the performance of the battery cell caused by an increased thickness of the separator assembly 1.

Over a length of 200 nm, the number A of voids may refer to the number of voids within the length of 200 nm in the x direction in FIG. 1.

When the thickness of the separator assembly 1 is not increased or even decreased, the size of the voids is relatively small, which may cause the ion transport path to be tortuous. Since the thickness of the separator assembly 1 is not increased or even decreased, the impact on the ion transport path is relatively small, thereby not deteriorating the rate performance and other performances of the battery cell.

As an example, a scanning electron microscope (SEM) may be used to photograph the surface of the separator assembly 1 to obtain an SEM image, and then a scale ruler is used to draw lines to count the number of voids in the image. Statistics may be performed on a plurality of regions, and the median of the obtained statistics is taken as the number of voids.

In some embodiments, over a length of 200 nm, the number A of voids in the surface of the first coating 112 satisfies: 3 ≤ A ≤ 6. For example, A is 3, 4, 5, 6, or an average value within the above ranges.

In some embodiments, over an area of 200 nm × 200 nm, a number B of voids in the surface of the first coating 112 satisfies: 10 ≤ B ≤ 60.

For example, B is 10, 20, 35, 50, 60, or any value within the above ranges. The statistics of the value of B may be performed with reference to the statistics of the value of A. As an example, a plurality of areas of 200 nm × 200 nm are taken, a plurality of numbers of voids in the plurality of areas are counted, and the median of the plurality of numbers is taken as B.

In this embodiment, by setting B to satisfy the above range, the separator assembly 1 is relatively dense, and the resistance to dendrite puncture is increased. At the same time, the requirement for the thickness of the separator assembly 1 can be reduced, compensating for other adverse effects that may be caused by the reduced size of the voids. In addition, the number of voids is not too large, so the particle size of the inorganic material is not too small, which can reduce the risk of gelation of the slurry for preparing the first coating 112 during the process of preparing the slurry for the first coating 112.

The value of A and/or B is related to the volume median particle size Dv50 of the inorganic material. Generally speaking, the smaller the volume median particle size Dv50 of the inorganic material, the larger the value of A and/or B. When the volume median particle size Dv50 of the inorganic material is in the range of 0.04 µm to 0.16 µm, A is generally 3 to 8, and B is generally 10 to 80 or 10 to 60.

Therefore, by setting A and/or B to satisfy the above ranges, the separator assembly 1 of this embodiment of the present application is beneficial for reducing the risk of short-circuiting the battery cell, and is also beneficial for taking into account the rate performance of the battery cell, so that the battery cell can have relatively good overall performance.

In some embodiments, in the first coating 112, a size C of voids between the inorganic materials satisfies: C ≤ 50 nm; optionally, C ≤ 20 nm. In this way, the first coating 112 is relatively dense, and the risk of puncturing the separator assembly 1 is relatively low.

C may be 50 nm, 30 nm, 20 nm, 10 nm, or any value satisfying the above ranges. An inscribed circle process may be performed on a void, and the radius of the inscribed circle is the size of the void.

The size of the voids between the inorganic materials can be achieved by setting the particle size of the particles of the inorganic material. Generally speaking, the smaller the particle size of the particles of the inorganic material (for example, the volume median particle size Dv50), the smaller the size of the voids. When the volume median particle size Dv50 of the inorganic material is in the range of 0.04 µm to 0.16 µm, C is generally 10 nm to 50 nm. The smaller the size of the voids between the inorganic materials, the denser the first coating 112, the stronger the ability to resist dendrite puncture, and the lower the risk of short-circuiting the battery cell.

In some embodiments, the inorganic material includes a ceramic material; optionally, the inorganic material includes at least one of silicon dioxide, aluminum oxide, zirconium trioxide, or boehmite. Using the above inorganic material facilitates the preparation of the relatively dense first coating 112.

As an example, the inorganic material includes aluminum oxide. For example, the inorganic material on the surface of the first coating 112 close to the negative electrode plate is aluminum oxide, and the inorganic material at other positions may be aluminum oxide or boehmite, etc. In this way, it is beneficial for reducing the influence of hydroxyl groups in boehmite on the negative electrode plate.

In some embodiments, an areal density D of the first coating 112 satisfies: D ≤ 3 g/mm²; optionally, D ≤ 2.5 g/mm². In this way, the first coating 112 has a relatively small areal density, so that the first coating 112 has a relatively small thickness.

The areal density D of the first coating 112 is related to the coating amount of the slurry during the preparation of the first coating 112. Under the same coating weight, due to the relatively small particle size of the inorganic material in this embodiment of the present application, the first coating 112 is denser, and the areal density D of the first coating 112 is larger, so that the prepared first coating 112 has a smaller thickness, thereby enabling the first coating 112 to have a relatively small thickness and a relatively high degree of densification, as well as a larger number of voids per unit length or area.

In some embodiments, a thickness d1 of the first coating 112 satisfies: 1.5 µm ≤ d1 ≤ 4 µm; optionally, d1 satisfies: 1.5 µm ≤ d1 ≤ 2 µm.

d1 refers to the total thickness of the first coating 112 in the first separator 11. As an example, when the first coating 112 is provided on the surface of only one side of the first base film 111, d1 refers to the thickness of one layer of the first coating 112. As another example, when the first coating 112 is provided on both surfaces of the first base film 111, d1 refers to the sum of the thicknesses of two layers of the first coating 112.

d1 may be 1.5 µm, 2 µm, 3 µm, 4 µm, or any value within the above ranges. d1 may be an average thickness of the first coating 112, for example, an average of the maximum thickness and the minimum thickness.

The smaller the value of d1, the more beneficial it is to reduce the ion transport path, thereby improving the rate performance of the battery cell. In addition, it is also beneficial for improving the energy density of the battery cell.

In this way, the first coating 112 has a relatively small thickness and a relatively high degree of densification, so that the separator assembly 1 has a suitable tortuosity, and the metal ions have a transport path of a suitable length. The battery cell can have relatively high rate performance while having a relatively low short-circuit risk.

In this embodiment of the present application, with the same coating weight, by setting the particle size of the inorganic material, the thickness of the first coating 112 can be reduced by 5% to 25%, so that the arrangement of the separator assembly in this embodiment of the present application is also beneficial for improving the energy density of the battery.

In some embodiments, the relationship between the average particle size of the volume Dv50 of the inorganic material and the thickness d1 of the first coating 112 satisfies: Dv50/d1 ≤ 0.08; optionally, 0.02 ≤ Dv50/d1 ≤ 0.08. In this way, the thickness of the first coating 112 is relatively small, and the particle size of the inorganic material in the first coating 112 is relatively small, so that the separator assembly 1 can have a relatively high degree of densification and a relatively short ion transport path.

In some embodiments, a porosity σ0 of the separator assembly 1 satisfies: 30% ≤ σ0 ≤ 40%. In this way, the porosity of the separator assembly 1 is relatively low, the separator assembly 1 is denser, and the risk of being punctured by dendrites is relatively low, thereby the risk of short-circuiting the battery cell is relatively low.

The porosity σ0 of the separator assembly 1 may be 30%, 35%, 40%, or any value within the above ranges. Compared with a separator assembly having a porosity greater than 40%, the separator assembly 1 of this embodiment has a relatively low porosity, so the separator assembly 1 is denser, the risk of being punctured by dendrites is lower, and it can better play a protective role, reducing the risk of short-circuiting the battery cell.

In some embodiments, the porosity of the separator assembly 1 may also be greater than 40%, for example, 45%. Compared with a separator assembly in the related art, even if the porosity of the separator assembly 1 is the same, the average particle size of the volume of the inorganic material in the first coating 112 of the separator assembly 1 in this embodiment of the present application is smaller, the surface of the first coating 112 has more voids per unit length or area, and the size of the voids is smaller. Therefore, the separator assembly in this embodiment of the present application has a better protective effect against dendrites.

In some embodiments, when the separator assembly 1 includes only the first separator 11, the porosity of the first base film 111 is 30%, and the average particle size of the volume of the inorganic material in the first coating 112 is 0.04 µm to 0.16 µm, the porosity of the separator assembly 1 may be about 30% to 35%. When the separator assembly 1 further includes the second separator 12, the porosity of the separator assembly 1 may be about 35% to 36%.

In some embodiments, when the separator assembly 1 includes only the first separator 11, the porosity of the first base film 111 is greater than 30% (for example, 40% to 50%), and the average particle size of the volume of the inorganic material in the first coating 112 is 0.04 µm to 0.16 µm, the porosity of the separator assembly 1 may be about 40% to 45%.

In some embodiments, the first base film 111 and/or the second base film 121 includes at least one of a polyethylene film (PE film), a polypropylene film (PP film), or a composite film formed of a polyethylene film and a polypropylene film.

The first base film 111 and/or the second base film 121 may be a single-layer film or a composite film.

The composite film formed of polyethylene and polypropylene may be a multilayer film formed of a PE film and a PP film, for example, a PE film/PP film, a PE film/PP film/PE film, etc. When the first base film 111 and/or the second base film 121 is a multilayer film, the material of each layer may be the same or different.

The material of the first base film 111 and/or the second base film 121 may also include at least one of glass fiber, non-woven fabric, or polyvinylidene fluoride.

### [Positive Electrode Plate]

The positive electrode plate includes a positive electrode current collector and a positive electrode film layer disposed on the positive electrode current collector.

The positive electrode current collector may be metal foil, or may be a composite current collector. For example, the positive electrode current collector may be aluminum foil.

The composite current collector may include a polymer material substrate layer and a metal layer formed on at least one surface of the polymer material substrate layer. The composite current collector may be formed by forming a metal material (aluminum, aluminum alloy, nickel, nickel alloy, titanium, titanium alloy, silver, silver alloy, or the like) on a polymer material substrate (for example, a substrate of polypropylene (PP), polyethylene terephthalate (PET), polybutylene terephthalate (PBT), polystyrene (PS), or polyethylene (PE)).

The positive electrode film layer includes a positive electrode active material. The positive electrode active material may be a positive electrode active material known in the art for use in batteries. For example, in a lithium metal battery or a lithium-ion battery, the positive electrode active material is lithium iron phosphate, a ternary material, a lithium-rich manganese-based material, or the like. In a sodium metal battery or a sodium-ion battery, the positive electrode active material is a Prussian blue analogue, a sodium-containing phosphate, a sodium-containing transition metal oxide, or the like.

The positive electrode film layer may optionally include a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluoroacrylate resin.

The positive electrode film layer may optionally include a conductive agent. The conductive agent may include at least one of superconducting carbon, acetylene black, carbon black, Ketjen black, carbon dots, carbon nanotubes, graphene, and carbon nanofibers.

### [Negative Electrode Plate]

The negative electrode plate includes a negative electrode current collector. The negative electrode current collector may be metal foil, or may be a composite current collector. The negative electrode current collector may be copper foil. The composite current collector may be formed by forming a metal material (copper, copper alloy, nickel, nickel alloy, titanium, titanium alloy, silver, silver alloy, or the like) on a polymer material substrate (for example, a substrate of polypropylene (PP), polyethylene terephthalate (PET), polybutylene terephthalate (PBT), polystyrene (PS), or polyethylene (PE)).

### [Electrolyte]

The electrolyte plays a role in conducting ions between the positive electrode plate and the negative electrode plate. A type of the electrolyte is not specifically limited in this embodiment of the present application, and may be selected based on requirements. For example, the electrolyte may be liquid, gel, or all solid.

In some embodiments, the electrolyte is an electrolyte solution. The electrolyte solution includes an electrolyte salt and a solvent. The electrolyte salt may be a sodium salt, a lithium salt, or the like, depending on the type of the battery cell.

The lithium salt may include at least one of lithium hexafluorophosphate, lithium hexafluoroarsenate, lithium perchlorate, lithium hexafluoroborate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluorobis(oxalato)phosphate, and lithium tetrafluoro(oxalato)phosphate.

The sodium salt may include NaPF₆, NaBF₄, NaN(SO₂F)₂, NaClO₄, or the like.

The solvent may include at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone.

The electrolyte may optionally include a negative electrode film forming additive and a positive electrode film forming additive, and may further include performance additives that can improve certain performance of the battery, such as a performance additive that improves overcharge performance of the battery, and a performance additive that improves battery performance at a high temperature or low temperature.

### [Battery Cell]

An embodiment of the present application provides a battery cell, which includes the separator assembly 1 in the above embodiments.

The shape of the battery cell is not particularly limited in this embodiment of the present application, and may be cylindrical, square, or any other shape. The battery cell may be an ion battery cell, a metal battery cell, or the like.

The metal battery cell may also be referred to as an "anode-less" battery cell. In the battery cell, active metal ions are initially stored in the positive electrode active material. During the initial charging process, the metal ions move from the positive electrode to the negative electrode and are deposited on the negative electrode current collector to form a metal. Subsequently, during the discharging process, the metal ions detach from the negative electrode and are intercalated into the positive electrode.

In a metal battery cell, the negative electrode may include only a negative electrode current collector and does not include a negative electrode active material such as graphite. In some special arrangements, a specific material may also be provided on the surface of the negative electrode current collector to improve the conductivity and other properties of the negative electrode plate.

In some embodiments, the battery cell is an alkali metal battery cell; optionally, the battery cell is a sodium metal battery cell.

Since the problem of dendrites is more pronounced in alkali metal battery cells during the charging and discharging process, higher requirements are placed on the separator assembly 1. In an alkali metal battery cell, by using the separator assembly 1 according to this embodiment of the present application, the risk of dendrites puncturing the separator assembly 1 can be reduced, thereby reducing the risk of internally short-circuiting the battery cell, while the battery cell has relatively good rate performance.

Alkali metal battery cells include lithium metal battery cells, sodium metal battery cells, potassium metal battery cells, zinc metal battery cells, and the like.

In some embodiments, the battery cell is a sodium-ion battery cell, a zinc-ion battery cell, or a lithium-ion battery cell. In the case of sodium precipitation in a sodium-ion battery cell or lithium precipitation in a lithium-ion battery cell, the separator assembly 1 is relatively dense, so that the risk of being punctured by precipitated lithium dendrites or sodium dendrites is relatively low. In addition, the sodium-ion battery cell, the zinc-ion battery cell, or the lithium-ion battery cell may also be a battery cell with a relatively small CB value.

The CB value may refer to a ratio of the capacity of the negative electrode facing the positive electrode to the capacity of the positive electrode. When the CB value is relatively small, for example, less than 1, the probability of dendrite precipitation on the negative electrode plate increases. By using the separator assembly 1 of this embodiment of the present application, the risk of dendrites puncturing the separator assembly 1 is relatively low, thereby reducing the risk of short-circuiting the battery cell.

In some embodiments, the battery cell further includes: a positive electrode plate and a negative electrode plate, the separator assembly 1 is disposed between the positive electrode plate and the negative electrode plate, and the first coating 112 faces the negative electrode plate. In this way, the negative electrode plate faces the side of the separator assembly 1 where the first coating 112 is disposed (for example, the first coating 112 is in direct contact with the negative electrode plate), which is beneficial for better protecting the separator assembly 1.

FIG. 8 is a schematic diagram of a battery cell according to an embodiment of the present application. For example, as shown in FIG. 8, a battery cell 3 is a square battery cell. The battery cell 3 includes a housing 31, an end cover component 32, and an electrode assembly 33 disposed in the housing 31.

The electrode assembly 33 may be formed by winding or stacking the positive electrode plate, the negative electrode plate, and the separator assembly.

The end cover assembly 32 includes an electrode terminal 322. For example, as shown in FIG. 8, the end cover assembly 32 includes two electrode terminals 322, where one thereof is a positive electrode terminal, and the other one is a negative electrode terminal.

The battery cell 3 further includes a current collecting member 34, and the current collecting member 34 is used to connect a tab 331 of the electrode assembly 33 and the electrode terminal 322.

In some embodiments, the battery cell is a secondary battery cell, which can be used repeatedly through charging and discharging.

In some embodiments, the battery cell can be assembled into a battery module, the number of battery cells contained in the battery module can be one or more, and the specific number can be selected by those skilled in the art according to the application and capacity of the battery module.

### [Battery]

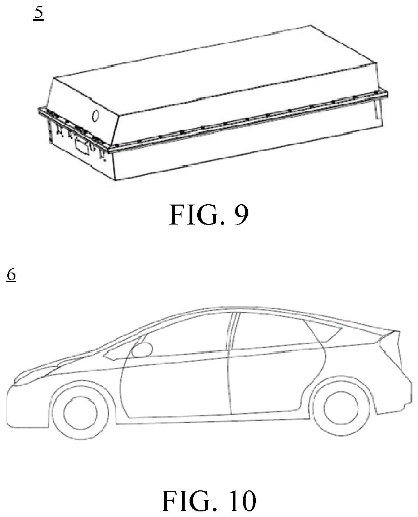

An embodiment of the present application provides a battery, which includes the battery cell in the above embodiment. FIG. 9 is a schematic diagram of a battery according to an embodiment of the present application. As shown in FIG. 9, a battery 5 may include a plurality of battery cells (which are not shown in the figure).

The battery cells 3 may directly form the battery 5, or may first form a battery module, and then a plurality of battery modules form the battery 5.

### [Power consuming apparatus]

An embodiment of the present application provides a power consuming apparatus, which includes the battery in the above embodiment.

FIG. 10 is a schematic diagram of a power consuming apparatus according to an embodiment of the present application. As shown in FIG. 10, this embodiment of the present application provides a power consuming apparatus 6, which includes the battery in the above embodiment.

Optionally, the power consuming apparatus may also be an energy storage device, a lighting device, an aerospace vehicle, or the like, and this embodiment of the present application includes but is not limited thereto.

Embodiments of the present application will be described below. The embodiments described below are exemplary and are only intended to explain the present application, but cannot be construed as limitations on the present application. If no specific technologies or conditions are specified in the embodiments, the technologies or conditions described in the literature in the art or the product manual shall be followed. The reagents or instruments used without manufacturers indicated are all conventional products that may be commercially available.

### [Embodiments]

### Embodiment 1

In Embodiment 1, refer to FIG. 1 for the structure of the separator assembly 1. The separator assembly 1 includes a first separator 11. The first separator 11 includes a first base film 111 and first coatings 112 located on both sides of the first base film 111.

A thickness d2 of the first base film 111 is 12 µm. A thickness d1 of the first coating 112 is 2 µm. The first coating 112 includes aluminum oxide. an average particle size of a volume Dv50 of the aluminum oxide is 0.04 µm.

### Embodiments 2 to 6

The difference between Embodiments 2 to 6 and Embodiment 1 lies in that: the average particle size of the volume Dv50 of the aluminum oxide in the first coating is different. In addition, the thickness of the first coating in Embodiments 2 to 6 is the same, and the areal density of the first coating is different due to the different average particle sizes of the volumes Dv50 of the aluminum oxide.

### Embodiments 7 to 12

The difference between Embodiments 7 to 12 and Embodiment 1 lies in that: the areal density of the first coating is different.

In Embodiments 7 to 12, since the areal density of the first coating in each of Embodiments 7 to 12 is the same, but the average particle size of the volume Dv50 of the aluminum oxide is different, the thickness of the first coating is different.

### Embodiments 13 to 15

The difference between Embodiments 13 to 15 and Embodiment 3 lies in that: the areal density of the first coating is different, and the thickness d1 of the first coating is different.

### Comparative Embodiment 1

The difference between Comparative Embodiment 1 and Embodiment 1 lies in that: the separator includes only a base film and does not include a coating.

### Comparative Embodiment 2

The difference between Comparative Embodiment 2 and Embodiment 1 lies in that: the average particle size of the volume of the inorganic material is relatively large.

### Comparative Embodiment 3

The difference between Comparative Embodiment 3 and Embodiment 1 lies in that: the average particle size of the volume of the inorganic material is relatively large, a second separator is additionally provided, the thickness of the second separator is about 14 µm, and the overall thickness of the separator assembly is relatively large.

**Table 1 Experimental Parameters and Results of Embodiments and Comparative Embodiments**

| | Separator assembly | | | | | Battery type | Short circuit condition | Rate performance |
|---|---|---|---|---|---|---|---|---|
| | First separator | | | | | | | |
| | First base film | | First coating | | | | | |
| | Thickness d2/µm | Porosity σ1/% | Thickness d1/µm | Dv50/µm | Areal density/g/mm² | Sodium metal battery | | |
| Embodiment 1 | 12 | 30 | 2 | 0.04 | 2.75 | Sodium metal battery | No short circuit | 0.948 |
| Embodiment 2 | 12 | 30 | 2 | 0.07 | 2.58 | Sodium metal battery | No short circuit | 0.949 |
| Embodiment 3 | 12 | 30 | 2 | 0.1 | 2.47 | Sodium metal battery | No short circuit | 0.953 |
| Embodiment 4 | 12 | 30 | 2 | 0.13 | 2.39 | Sodium metal battery | No short circuit | 0.945 |
| Embodiment 5 | 12 | 30 | 2 | 0.16 | 2.33 | Sodium metal battery | No short circuit | 0.937 |
| Embodiment 6 | 12 | 30 | 2 | 0.02 | 2.96 | Sodium metal battery | No short circuit | 0.923 |
| Embodiment 7 | 12 | 30 | 1.68 | 0.04 | 2.31 | Sodium metal battery | No short circuit | 0.95 |
| Embodiment 8 | 12 | 30 | 1.79 | 0.07 | 2.31 | Sodium metal battery | No short circuit | 0.943 |
| Embodiment 9 | 12 | 30 | 1.87 | 0.1 | 2.31 | Sodium metal battery | No short circuit | 0.962 |
| Embodiment 10 | 12 | 30 | 1.93 | 0.13 | 2.31 | Sodium metal battery | No short circuit | 0.951 |
| Embodiment 11 | 12 | 30 | 1.98 | 0.16 | 2.31 | Sodium metal battery | No short circuit | 0.932 |
| Embodiment 12 | 12 | 30 | 1.56 | 0.02 | 2.31 | Sodium metal battery | No short circuit | 0.925 |
| Embodiment 13 | 12 | 30 | 3 | 0.1 | 3.71 | Sodium metal battery | No short circuit | 0.92 |
| Embodiment 14 | 12 | 30 | 4 | 0.1 | 4.95 | Sodium metal battery | No short circuit | 0.909 |
| Embodiment 15 | 12 | 30 | 5 | 0.1 | 6.18 | Sodium metal battery | No short circuit | 0.888 |
| Comparative Embodiment 1 | 12 | 55 | / | / | / | Sodium metal battery | Short circuit | / |
| Comparative Embodiment 2 | 12 | 30 | 2 | 0.18 | 2.31 | Sodium metal battery | Short circuit | / |
| Comparative Embodiment 3 | 12 | 30 | 2 | 0.3 | 2.13 | Sodium metal battery | No short circuit | 0.726 |

### [Preparation of Sodium Metal Battery Cell]

(1) Preparation of positive electrode plate: A positive electrode active material NaFeP₂O₇, a conductive agent carbon black Super P, and a binder polyvinylidene fluoride (PVDF) are mixed in a solvent N-methyl pyrrolidone (NMP) at a weight ratio of 96:2:2 with stirring until uniform, to obtain a positive electrode slurry. The positive electrode slurry is applied uniformly onto a positive electrode current collector aluminum foil, and then subjected to drying and cold pressing, to obtain a positive electrode plate.
(2) Preparation of negative electrode plate: A copper foil with a thickness of 6 µm is used as a negative electrode current collector.
(3) Separator: A polypropylene film is used as a first base film, and a corresponding coating material is disposed on the first base film to prepare a first coating. In a case that a second separator is provided, the first separator and the second separator are connected by adhesive bonding.
(4) Preparation of electrolyte: Sodium hexafluorophosphate at a concentration of 1 mol/L is dissolved in a mixed solvent of diethylene glycol dimethyl ether/tetraethylene glycol dimethyl ether at a volume ratio of 1:1, to obtain an electrolyte.
(5) Preparation of sodium metal battery cell: The positive electrode plate, the separator, and the negative electrode plate are stacked and wound in order, to obtain an electrode assembly. The electrode assembly is placed into an outer package, the above-prepared electrolyte is added, and then the assembly is subjected to processes such as encapsulation, standing, formation, and aging, to obtain a sodium metal battery cell.

### [Test of Porosity]

(1) The porosity of the separator assembly may be tested with reference to GB/T 33052-2016. The separator assembly is cut into an appropriate size, and a volume V of the separator assembly is measured. The separator assembly is stored in a bottle filled with hexadecane for a certain period of time, so that the pores in the separator are completely filled with hexadecane, and a volume V2 of the absorbed hexadecane is calculated.
   The porosity of the separator assembly is: σ0 = (V2/V1) ×100%.
(2) The porosity of a base film may be measured by the following method: A base film of an appropriate size (which may refer to either the first base film or the second base film) is taken, and a macroscopic size V3 of the base film (containing pores) is obtained. A volume V4 of hexadecane absorbed by the base film is measured using the above method, and the porosity of the base film is: σ1 = (V4/V3) × 100%.
(3) The porosity of a coating may be obtained by the following method:
   The porosity of the first coating is the difference between the porosity of the first separator and the porosity of the first base film. The porosity of the second coating is the difference between the porosity of the second separator and the porosity of the second base film. In a case where the separator assembly includes only the first separator, the porosity of the first separator is the porosity of the separator assembly. In a case where the separator assembly includes the first separator and the second separator, the first separator and the second separator may be separated from each other, and then the porosities of the first separator and the second separator are measured respectively according to the method in (1).

### [Test of Thickness of Separator Assembly]

The separator assembly is treated by ion polishing technology (also referred to as ion milling) to obtain a cross-section of the separator, and then the thickness of the base film and the thickness of the coating are respectively measured using a scanning electron microscope (SEM).

### [Measurement of Void Size]

The separator assembly is observed using a scanning electron microscope (SEM), and at a magnification of 3000 kx, with reference to a 200 nm scale bar, the sizes of voids are measured. An inscribed circle process may be performed on a void, and the radius of the inscribed circle is the size of the void.

### [Measurement of Number of Voids]

The surface of the separator assembly is photographed using a scanning electron microscope (SEM) to obtain an SEM image, then a scale ruler is used to draw lines, a specific length or a specific area is taken, and the number of voids in the image is counted. Statistics may be performed on a plurality of regions, and the median of the obtained statistics is taken as the number of voids.

### [Test of Internal Short Circuit]

In the embodiments of the present application, whether a battery cell has an internal short circuit may be reflected by a voltage drop rate of the battery cell.

The battery cell is charged at 0.33C to U1 (where U1 is set according to the positive electrode material in the battery cell, and for the sodium metal battery in the embodiments of the present application, U1 is 3.65 V). The battery cell is left to stand for 2 days, and an open-circuit voltage U2 is obtained.; The battery cell is then left to stand for another day, and an open-circuit voltage U3 is obtained, and a voltage drop rate is calculated as (U2-U3)/24 h. If the voltage drop rate is greater than a threshold of 0.4 mV/h, the battery cell is considered to have an internal short circuit.

### [Test of Rate Performance]

The rate performance is reflected by a capacity retention rate at a 2C rate, and the capacity retention rate at the 2C rate is C1/C0.

Test of C0: The prepared battery cell is left to stand for 30 min, and then charged at a constant current of 0.33C to 3.65 V under a condition of 25°C, and then left to stand for 30 min. The battery cell is then discharged at a constant current of 0.33C to 1.5 V, and left to stand for 10 min. The capacity obtained by this test method is recorded as C0.

Test of C1: The prepared battery cell is left to stand for 30 min, and then charged at a constant current of 2C0 to 3.65 V under a condition of 25°C, and then left to stand for 30 min. The battery cell is then discharged at a constant current of 0.33C to 1.5 V, and left to stand for 10 min. The capacity obtained by this test method is recorded as C1.

In this test method, the rate performance may also reflect, to a certain extent, the risk of internally short-circuiting the battery cell. For example, if a battery cell has an internal short circuit, phenomena such as self-discharge may occur inside the battery cell, so that the theoretical capacity that the battery cell can discharge is reduced, and the corresponding rate performance is also relatively poor.

In Comparative Embodiment 1, the separator assembly is provided only with a base film, the battery cell prepared with this separator assembly has an internal short circuit, and the voltage drop rate is very high. In Comparative Embodiment 2, the average particle size of the volume of the inorganic material in the first coating of the separator assembly is relatively large, resulting in that the separator assembly is not dense enough, the battery cell has an internal short circuit, and the voltage drop rate is relatively high.

In Comparative Embodiment 3, the average particle size of the volume of the inorganic material in the first coating of the separator assembly is relatively large, and a second separator is additionally provided in the separator assembly, so that the overall thickness of the separator assembly is larger. Although the voltage drop rate of the battery cell is reduced and the battery cell does not have an obvious internal short circuit, the rate performance of the battery cell is greatly reduced.

As shown in combination with Embodiments 1 to 15 and Comparative Embodiments 1 to 3, the battery cells including the separator assembly according to the embodiments of the present application all have no internal short circuit and have relatively high rate performance, which can reflect that the separator assembly according to the embodiments of the present application has a relatively good ability to resist dendrite puncture and at also has a suitable ion transport path.

As shown in combination with Embodiments 1 to 5, when the thickness of the first coating is the same, the smaller the particle size of the inorganic material, the denser the first coating, and the first coating has a larger areal density; and in a case where the average particle size of the volume of the inorganic material is in the range of 0.04 µm to 0.16 µm, the battery cell does not have an internal short circuit, and meanwhile, the battery cell has relatively high rate performance. As shown in combination with Embodiment 3, in a case where the average particle size of the volume of the inorganic material is 0.1 µm, the battery cell exhibits relatively high rate performance.

As shown in combination with Embodiments 7 to 11, in a case where the first coating has the same areal density, as the particle size of the inorganic material decreases, the thickness of the first coating decreases, and the capacity retention rate of the battery cell at a 2C rate basically shows an increasing trend, and the rate performance is improved. As shown in combination with Embodiment 9, in a case where the average particle size of the volume of the inorganic material is 0.1 µm, the battery cell exhibits relatively high rate performance.

As shown in combination with Embodiments 6 and 12, in a case where the Dv50 of the inorganic material is 0.02 µm (less than 0.04 µm), the particle size of the inorganic material is relatively small. Although the first coating is relatively dense, due to the relatively small particle size of the inorganic material, the risk of gelation of the slurry during the preparation process increases. Meanwhile, the rate performance of the battery cell also decreases to some extent.

As shown in combination with Embodiments 3 and 9 and Embodiments 13 to 15, as the thickness of the first coating increases, the strength of the first coating in preventing dendrite puncture increases, but the ion transport path becomes longer, and the rate performance of the battery cell decreases.

As shown in combination with Embodiments 13 to 15 and Embodiments 1 to 12, setting the areal density of the first coating to be less than or equal to 3 g/mm² is beneficial for improving the rate performance of the battery cell. Further, setting the areal density of the first coating to be less than 2.5 g/mm² is beneficial for further improving the rate performance of the battery cell.

As shown in combination with Embodiments 1 to 15, by setting the thickness of the first coating to be in a range of 1.5 µm to 4 µm, the battery cell can have relatively high rate performance without short-circuiting. Further, setting the thickness of the first coating to be in a range of 1.5 µm to 2 µm, the battery cell can have even higher rate performance.

Compared with a lithium metal battery, in a sodium metal battery, generally speaking, the growth of dendrites is more pronounced. In addition, compared with an ion battery, the growth of dendrites in a metal battery is also more pronounced. Therefore, the separator assembly according to the embodiments of the present application may also be applied to lithium metal batteries, sodium-ion batteries, and lithium-ion batteries. In addition, the separator assembly according to the embodiments of the present application may also be applied to other alkali metal batteries or ion batteries.

In addition, in the present application, some other embodiments are provided. In some embodiments, embodiments with a porosity of the first base film 111 different from that of Embodiment 1 are provided. The test results show that the porosity of the first base film in Embodiment 3 is smaller, the surface of the first coating is flatter, and dendrites are less likely to be generated. However, in the embodiments where the porosity of the first base film is larger, dendrites are more likely to be generated compared with Embodiment 3. Whether dendrites are generated or the amount of dendrites generated may be determined by disassembling the battery and observing the metal dendrites on the surface of the separator assembly or the electrode plate. In some embodiments, tests are performed on separator assemblies having different structures. The test results show that when the first coating is provided on the surface of only one side of the first base film, the battery cell prepared with this separator assembly has a relatively low voltage drop rate (no short circuit) and relatively high rate performance. When the second separator is provided, the overall porosity of the separator assembly increases, and the separator assembly has better electrolyte retention capability.

It needs to be stated that the present application is not limited to the embodiments above. The above described embodiments are merely exemplary, and embodiments having substantially the same technical idea and the same effects within the scope of the technical solution of the present application are all included in the technical scope of the present application. In addition, other embodiments constructed by applying various modifications conceivable to those skilled in the art to the embodiments and combining some of the constituent elements of the embodiments without departing from the scope of the present application are also included in the scope of the present application.

## Claims

1. A separator assembly, comprising: a first separator, wherein
the first separator comprises a first base film and a first coating, the first coating is located on a surface of at least one side of the first base film, the first coating comprises an inorganic material, and an average particle size of a volume Dv50 of the inorganic material satisfies: Dv50 ≤ 0.16 µm.

2. The separator assembly according to claim 1, wherein the average particle size of the volume Dv50 of the inorganic material satisfies: 0.04 µm ≤ Dv50 ≤ 0.16 µm.

3. The separator assembly according to claim 1 or 2, wherein a porosity σ1 of the first base film satisfies: 30% ≤ σ1 ≤ 45%.

4. The separator assembly according to any one of claims 1 to 3, wherein the separator assembly further comprises:
a second separator, wherein the second separator is located on a side of the first coating away from the first base film, and a porosity of the second separator is greater than a porosity of the first separator.

5. The separator assembly according to claim 4, wherein the second separator comprises:
a second base film, wherein the second base film is located on the side of the first coating away from the first base film.

6. The separator assembly according to claim 4 or 5, wherein the second separator comprises:
a second base film and a second coating, wherein the second coating is located between the second base film and the first coating; or,
the second base film is located between the second coating and the first coating.

7. The separator assembly according to any one of claims 1 to 6, wherein over an area of 200 nm × 200 nm, a number B of voids in a surface of the first coating satisfies: 10 ≤ B ≤ 60.

8. The separator assembly according to any one of claims 1 to 7, wherein in the first coating, sizes C of the voids between inorganic materials satisfy: C ≤ 50 nm; optionally, C ≤ 20 nm.

9. The separator assembly according to any one of claims 1 to 8, wherein the inorganic material comprises a ceramic material; optionally, the inorganic material comprises at least one of silicon dioxide, aluminum oxide, zirconium trioxide, or boehmite.

10. The separator assembly according to any one of claims 1 to 9, wherein an areal density D of the first coating satisfies: D ≤ 3 g/mm²; optionally, D ≤ 2.5 g/mm².

11. The separator assembly according to any one of claims 1 to 10, wherein a thickness d1 of the first coating satisfies: 1.5 µm ≤ d1 ≤ 4 µm; optionally, d1 satisfies: 1.5 µm ≤ d1 ≤ 2 µm.

12. The separator assembly according to any one of claims 1 to 11, wherein a porosity σ0 of the separator assembly satisfies: 30% ≤ σ0 ≤ 40%.

13. A battery cell, comprising the separator assembly according to any one of claims 1 to 12.

14. The battery cell according to claim 13, wherein the battery cell further comprises: a positive electrode plate and a negative electrode plate, wherein the separator assembly is disposed between the positive electrode plate and the negative electrode plate, and the first coating faces the negative electrode plate.

15. The battery cell according to claim 13 or 14, wherein the battery cell is an alkali metal battery cell; optionally, the battery cell is a sodium metal battery cell.

16. A battery, comprising the battery cell according to any one of claims 13 to 15.

17. A power consuming apparatus, comprising the battery according to claim 16.
